# EUROPÄISCHE PATENTSCHRIFT

(11) **EP 2 561 332 B1**
(45) Veröffentlichungstag und Bekanntmachung des Hinweises auf die Patenterteilung: **18.06.2014**
(21) Anmeldenummer: 10798764.6
(22) Anmeldetag: 16.12.2010
(51) Int. Cl.: G01M 99/00, G01N 25/72, G01N 21/95

(54) **PRÜFSYSTEM ZUR ÜBERPRÜFUNG VON TURBINENSCHAUFELN**
TESTING SYSTEM FOR EXAMINING TURBINE BLADES
SYSTÈME DE CONTRÔLE POUR L'INSPECTION D'AUBES DE TURBINES

(30) Priorität: 23.04.2010 DE 102010018013
(43) Veröffentlichungstag der Anmeldung: 27.02.2013
(73) Patentinhaber: Siemens Aktiengesellschaft, 80333 München (DE)
(72) Erfinder: JAHNKE, Ronny, 14612 Falkensee (DE); SCZEPUREK, Tristan, 13129 Berlin (DE)
(86) Internationale Anmeldenummer: PCT/EP2010/069947
(87) Internationale Veröffentlichungsnummer: WO 2011/131263

(56) Entgegenhaltungen:
- EP-A1- 1 475 629
- EP-A1- 1 739 409
- EP-A1- 1 767 743
- EP-A1- 1 898 209
- WO-A1-98/05949
- WO-A2-03/038403
- US-A- 5 111 046
- US-A- 5 125 035
- US-A1- 2008 237 466

## Beschreibung

Die Erfindung betrifft im Allgemeinen ein Prüfsystem zur Überprüfung von Turbinenschaufeln und insbesondere ein Prüfsystem zur Überprüfung der Beschichtung und von offenen Kühlluftbohrungen von Turbinenschaufeln, etwa von Gasturbinenschaufeln.

Die Überprüfung der Beschichtung und von offenen Kühlluftbohrungen an Turbinenschaufeln wird mittels einer Infrarotkamera realisiert. Hierbei wird mittels Heißluft und Blitzlampen angeregt und der resultierende Wärmefluss mit einer Infrarotkamera erfasst. Um geeignete Bereiche und/oder Bildabschnitte zu prüfen, müssen das Bauteil wie zum Beispiel eine Turbinenschaufel und die Kamera entsprechend positioniert werden.

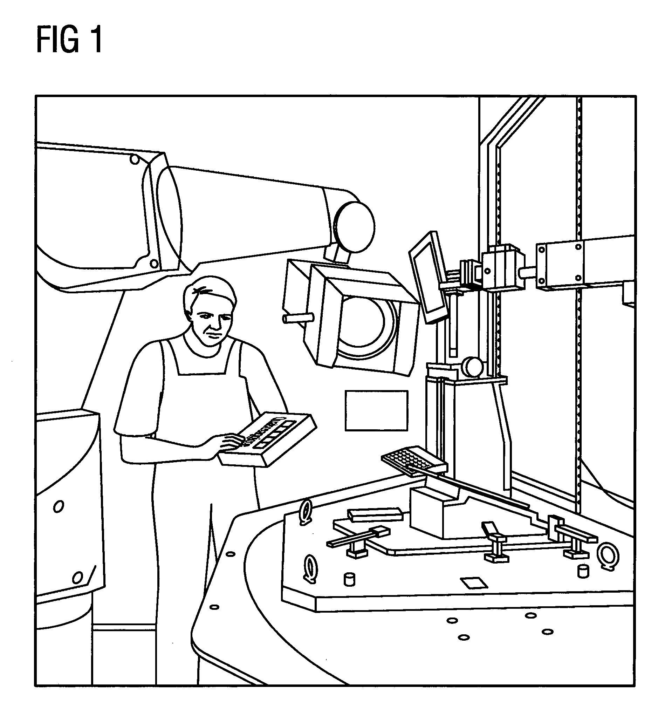

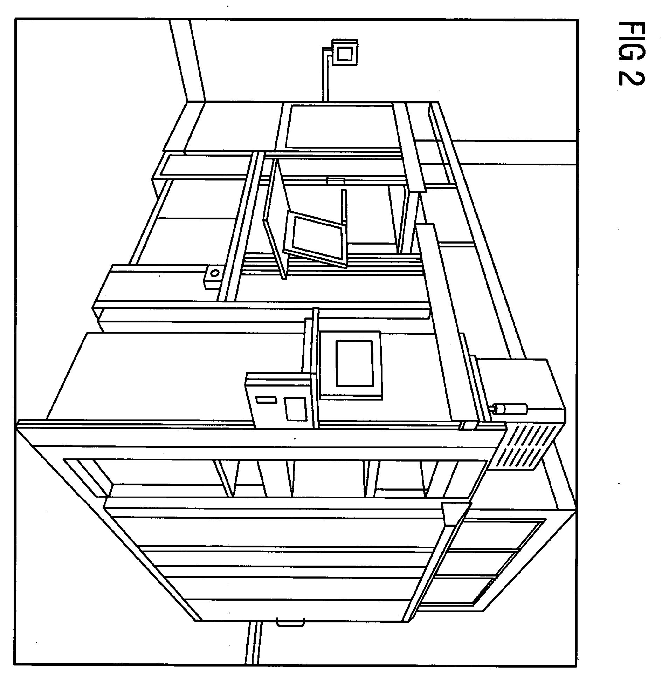

Anhand der Figuren 1 und 2 wird ein bekanntes Prüfsystem beschrieben. Bei dem bekannten Prüfsystem wird die Infrarotkamera mittels eines Industrieroboters positioniert. Die Turbinenschaufel ist auf einem Drehtisch fixiert. Der Drehtisch hat üblicherweise zwei Aufnahmen für Turbinenschaufeln, die so angeordnet sind, dass sich eine Aufnahme in einer Einhausung des Roboters zum Prüfen befindet während die andere Aufnahme außen zugänglich ist für die Bestückung oder die Entnahme der Turbinenschaufel.

Der außerhalb der Einhausung befindliche Arbeitsplatz des Prüfers ist von Blitz und Strömungsgeräuschen abgeschirmt. Bei einem Prüfablauf wird zunächst die Art der Prüfung, die Prüfposition und der Fokus der Infrarotkamera festgelegt. Dann werden die Parameter in eine Systemdatenbank übertragen. Der Roboter fährt einen Prüfpfad ab, um so die Infrarotkamera zu positionieren.

WO 98/05949 A1 offenbart ein Prüfsystem zur Delaminationsprüfung auf Gasturbinenschaufeln mit einer Drehvorrichtung für die Schaufel und einer drei-achsigen Positioniervorrichtung für eine IR-Kamera. Zur Kontrolle der inneren Strukturen kann Heißluft in die Schaufel eingeführt werden.

EP 1 739 409 A1 offenbart ein Prüfsystem zur Bestimmung des Orts und der Winkellage von Löchern in einer Turbinenschaufel mit einer ortsfesten Aufnahme für die Schaufel, einer Positioniervorrichtung für eine IR-Kamera und einen Heizstrahler zur Erhitzung der Turbinenschaufel.

US 2008/237466 A1 offenbart ein Prüfsystem zur Bestimmung des Gasflusses durch Löcher in einer Turbinenschaufel mit einer ortsfesten Aufnahme für die Turbinenschaufel und einer an einem Roboterarm angeordneten IR-Kamera. Warme Luft wird durch die Aufnahme und durch die Turbinenschaufel geleitet.

WO 03/038403 A2 offenbart ein Inspektionssystem für eine Turbinenschaufel mit einer ortsfesten Aufnahme zum Halten und Einführen von Luft oder Gas in die Turbinenschaufel. Mehrere Spiegel sind um die Aufnahme angeordnet, um mehr als eine Seite oder Kante der Turbinenschaufel einer IR-Kamera zugänglich zu machen.

US 5 111 046 A offenbart eine Vorrichtung zur Inspektion von Kanälen einer Turbinenschaufel mit einer ortsfesten Aufnahme zum Halten und Einführen von Luft oder Gas in die Turbinenschaufel und eine IR-Kamera zur Aufzeichnung von Aufheiz- und Abkühlvorgängen.

Es ist Aufgabe der Erfindung, die Prüfung von Turbinenschaufeln zu vereinfachen.

Diese Aufgabe wird gemäß der Erfindung mit den Merkmalen des Anspruchs 1 gelöst. Vorteilhafte Weiterbildungen der Erfindung sind in den abhängigen Ansprüchen definiert.

Die Erfindung ist auf ein Prüfsystem zur Überprüfung der Beschichtung und von offenen Kühlluftbohrungen von Turbinenschaufeln, insbesondere von Gasturbinenschaufeln gerichtet, aufweisend eine Dreh-Schwenkvorrichtung zur Positionierung der Turbinenschaufel, eine an der Dreh-Schwenkvorrichtung angeordnete drehbare Luftdurchführung zum Einbringen von Luft mit einer im Vergleich zur Turbinenschaufel höheren oder niedrigeren Temperatur in die Turbinenschaufel und eine Positioniervorrichtung für eine Infrarotkamera mit zwei Freiheitsgraden. Die berührungslose und zerstörungsfreie Prüfung der Turbinenschaufel wird durch die Erfindung deutlich vereinfacht. Abweichend vom bisherigen Vorgehen, bei dem die IR-Kamera von einem Industrieroboter um die Turbinenschaufel bewegt wurde, wird nun das Bauteil gedreht und geschwenkt, während die Kamera mit einer Positioniervorrichtung, wie zum Beispiel einem ZX-Motortisch bewegt wird. Eine drehbare Luftdurchführung erlaubt die Zufuhr von Luft mit einer im Vergleich zur Turbinenschaufel höheren oder niedrigeren Temperatur oder einem Gas mit einer im Vergleich zur Turbinenschaufel (20) höheren oder niedrigeren Temperatur in die Turbinenschaufel auch bei Drehung des Bauteils. Insgesamt kommt es nicht darauf an, ob die Luft bzw. das Gas erwärmt oder gekühlt ist, sondern nur aufeinen Temperaturunterschied zwischen der Luft bzw. dem Gas einerseits und der Turbinenschaufel andererseits, der groß genug ist, um ihn mit der IR-Kamera erkennen zu können. So könnte bspw. auch die Turbinenschaufel gegenüber der Luft oder dem verwendeten Gas erwärmt oder gekühlt werden. Typischerweise findet aber erwärmte und gekühlte Luft bzw. erwärmtes und gekühltes Gas Verwendung, wobei die erwärmte Luft (bzw. das erwärmte Gas) und die gekühlte Luft (bzw. das gekühlte Gas) der Turbinenschaufel im Wechsel zugeführt werden, um einem zu hohen Aufheizen bzw. zu tiefen Abkühlen der Turbinenschaufel während der Prüfung entgegenzuwirken.

Diese Vorrichtung ist kostengünstiger als eine Lösung mit einem Industrieroboter, die Kostenersparnis kann bei etwa 500.000 € pro Prüfsystem liegen. Zudem ist eine deutlich kleinere Prüfanlage möglich, die gewissermaßen mobil ist. Da die Kamera nur positioniert wird, also weder gedreht noch gekippt wird, bleibt die Ausrichtung der Kamera immer konstant. Die konstante waagerechte Lage ist für eine flüssigkeitsgekühlte IR-Kamera von herausragender Bedeutung, da eine Lageänderung zur Verschlechterung der Bildqualität führt, bedingt durch Wärmefluss- und Sterling-Kühler Effekte.

Die Dreh-Schwenkvorrichtung kann eine Grundplatte mit einem um eine Drehachse drehbaren Drehteller aufweisen. Dies ist eine gut umzusetzende Lösung, die platzsparend ist und gut für die Aufnahme einer Turbinenschaufel geeignet ist.

Die Grundplatte kann um eine Schwenkachse, die senkrecht zu der Drehachse ist, schwenkbar sein. Die Schwenkachse stellt einen zweiten Freiheitsgrad dar, so dass das Bauteil für eine vollständige Untersuchung positioniert werden kann.

Die Dreh-Schwenkvorrichtung kann in Dreh- und/oder Schwenkrichtung stufenlos oder stufenweise arretierbar sein. Dies ermöglicht eine Fixierung der Position der Turbinenschaufel zum Beispiel in vorgegebenen Testpositionen. Auch eine motorisch angetriebene Dreh-Schwenkvorrichtung ist möglich. Auf die Arretierung kann dann verzichtet werden.

Die Dreh-Schwenkvorrichtung kann eine Schaufeleinspannvorrichtung, etwa eine pneumatische Schaufeleinspannvorrichtung, zur Fixierung der Turbinenschaufel aufweisen. Die Dreh-Schwenkvorrichtung kann somit zur Fixierung und Positionierung der Turbinenschaufel verwendet werden. Die Fixierung kann die Turbinenschaufel auch bei Schwenk- und/oder Drehbewegungen sicher auf der Dreh-Schwenkvorrichtung halten.

Die Luftdurchführung kann einen hochtemperaturbeständigen Drehverbinder aufweisen. Dies ermöglicht eine Drehung der Schaufel inklusive der Warmluft- oder Gasversorgung.

Der Drehverbinder kann im Bereich der Drehachse angeordnet sein. So kann beispielsweise eine hohle Drehachse als Zufuhr für die Heizluft dienen. Dies reduziert den baulichen Aufwand.

Die Positioniervorrichtung für die IR-Kamera kann einen horizontalen und einen vertikalen Freiheitsgrad aufweisen. Diese vereinfachte Kamerapositionierung ist eine kostengünstige Lösung, da nur zwei Freiheitsgrade verwendet werden, zum Beispiel realisiert mit einem ZX-Tisch. Mit dem horizontalen und den vertikalen Freiheitsgrad kann die Kamera ausreichend positioniert werden, um alle Bereiche der Turbinenschaufel zu prüfen.

Das Prüfsystem kann eine an der Positioniervorrichtung angeordnete Infrarotkamera aufweisen. Die Kamera kann bereits Bestandteil des Prüfsystems sein oder sie kann nachgerüstet werden.

Das Prüfsystem kann ein Grundgestell mit einer Prüfkabine aufweisen, in der die Dreh-Schwenkvorrichtung und die Positioniervorrichtung angeordnet sind. Das Grundgestell kann die Dreh-Schwenkvorrichtung, die drehbare Luftdurchführung und die Positioniervorrichtung für die Infrarotkamera tragen. Dies ermöglicht eine stabile Basis des Prüfsystems und erlaubt eine einfache Bewegung des Prüfsystems.

Die Prüfkabine kann verschließbar sein. So können Umgebung und das Bedienpersonal vor Lärm und weiteren Belastungen geschützt werden. Die Prüfkabine kann auch luftdicht oder annähernd luftdicht verschlossen sein, um Austreten der Luft oder eines Gases mit der im Vergleich zur Turbinenschaufel höheren oder niedrigeren Temperatur, das zum Prüfen verwendet wird, zu verhindern oder zu verringern.

Das Prüfsystem kann eine Luftabsaugvorrichtung aufweisen, um die zugeführte Luft oder das zugeführte Gas wieder abzusaugen und gegebenenfalls in einem Kreislauf wieder zu verwenden. Auch kann so ein geringer Unterdruck in der Prüfkabine erzeugt werden, der ein Austreten der Luft oder des Gases aus der Prüfkabine verhindert. Zusätzlich oder alternativ kann das Prüfsystem auch eine Klimatisiervorrichtung für die Prüfkabine umfassen, wodurch die Temperatur in Inneren der Prüfkabine während des Prüfvorgangs eingestellt und weitgehend konstant gehalten werden kann.

Das Prüfsystem kann eine außerhalb der Prüfkabine angeordnete Informations- und/oder Bedieneinheit aufweisen. So kann auch bei geschlossener Prüfkabine die Prüfung überwacht und/oder gesteuert werden.

Das Prüfsystem kann mindestens eine Blitzlampe für blitzthermographische Messungen aufweisen. Damit sind erweiterte Messungen möglich.

Das Prüfsystem kann eine Ultraschallvorrichtung für eine Ultraschallanregung der Turbinenschaufel aufweisen. Damit sind erweiterte Messungen möglich.

Im Folgenden wird die Erfindung anhand der Zeichnungen näher beschrieben, in denen zeigen:
- Figur 1: ein bekanntes Prüfsystem für eine Turbinenschaufel;
- Figur 2: eine weitere Darstellung des bekannten Prüfsystems für eine Turbinenschaufel;
- Figuren 3 - 7: verschiedene Ansichten eines Grundgestells mit Prüfkabine des Prüfsystems gemäß der Erfindung;
- Figur 8: eine perspektivische Darstellung des Grundgestells gemäß der Erfindung;
- Fign 9 - 14: verschiedene Ansichten einer Dreh-Schwenkvorrichtung gemäß der Erfindung;
- Fign 15, 16: perspektivische Darstellungen der Dreh-Schwenkvorrichtung gemäß der Erfindung;
- Fign 17 - 20: verschiedene Ansichten eines Drehtellers mit Luftdurchführung gemäß der Erfindung;
- Fign 21 - 27: verschiedene Ansichten einer Positioniervorrichtung mit Infrarotkamera gemäß der Erfindung.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

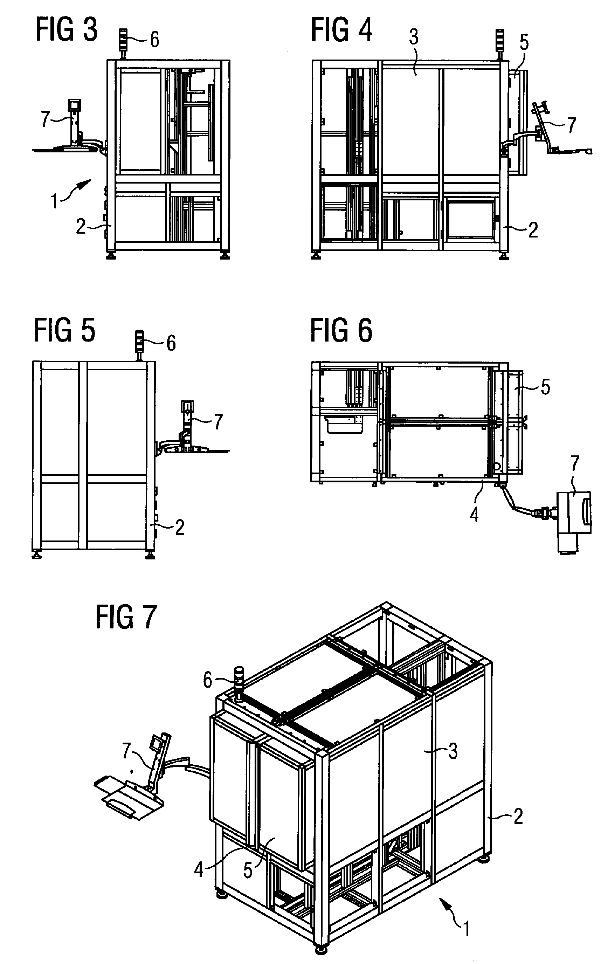

Die Figuren 3 bis 7 zeigen ein Prüfsystem 1 zur Überprüfung von Turbinenschaufeln oder ähnlichen Schaufeln in unterschiedlichen Ansichten.

Die Figuren 3 bis 5 zeigen unterschiedliche Seitenansichten, Figur 6 eine Draufsicht und Figur 7 eine perspektivische Ansicht. In dem Prüfsystem 1 werden die Beschichtung und offene Kühlluftbohrungen der Turbinenschaufel untersucht.

Das Prüfsystem 1 basiert auf einem Grundgestell 2, das beispielsweise aus Aluminiumprofilen besteht, wobei die zwischen den einzelnen Profilen entstehenden offenen Flächen offen bleiben können oder mit einer Platte 3 verkleidet werden können.

Das Prüfsystem 1 kann wie dargestellt auf Füßen stehen, so dass ein Gabelstapler oder Hubwagen das Prüfsystem 1 hochheben und versetzen kann. Alternativ kann das Prüfsystem 1 auf vorzugsweise arretierbaren Rollen oder Rädern stehen.

Auf dem Grundgestell 2 ist eine Prüfkabine 4 angeordnet, die mit zwei Türen 5 verschlossen werden kann. Die Prüfkabine 4 kann luftdicht oder annähernd luftdicht ausgebildet sein, um ein Austreten von Luft oder Gas zu vermeiden. Die Prüfkabine 4 ist rundherum mit Platten 3 verkleidet, welche gegenüber den Aluminiumprofilen abgedichtet sein können. An der Oberseite der Prüfkabine kann zudem eine verschließbare Beladeöffnung vorhanden sein, die das Einbringen schwerer Prüfteile mit Hilfe eines Krans ermöglicht.

An der Oberseite des Prüfsystems 1 ist eine Informationseinheit 6 angeordnet. Die Informationseinheit 6 kann zum Beispiel aus drei Leuchten mit den Farben Grün, Gelb oder Orange und Rot bestehen. Diese drei Leuchten zeigen den Status des Prüfsystems 1 wie folgt an. Grün zeigt einen fehlerfreien Betrieb an, Gelb oder Orange zeigt einen Fehler oder eine Warnung an und Rot weist auf eine Störung hin.

Weiterhin ist das Prüfsystem 1 mit einer Bedieneinheit 7 ausgerüstet. Die Bedieneinheit 7 kann einen Computer wie zum Beispiel einen Laptop oder den Monitor und die Tastatur eines fest eingebauten speziell für das Prüfsystem hergerichteten Computers umfassen, der mit einem Steuer- und/oder Überwachungssystem des Prüfsystems 1 verbunden ist. Von der Bedieneinheit 7 ist der Einfachheit halber lediglich die Halterung für den Computer dargestellt. Die Halterung der Bedieneinheit 7 ist im Bereich der Türen 5 angeordnet, um eine einfache Bedienung des Prüfsystems 1 zu ermöglichen. Die Halterung kann in einigen oder allen Freiheitsgraden verstellt werden, um so an das bedienende Personal angepasst werden zu können.

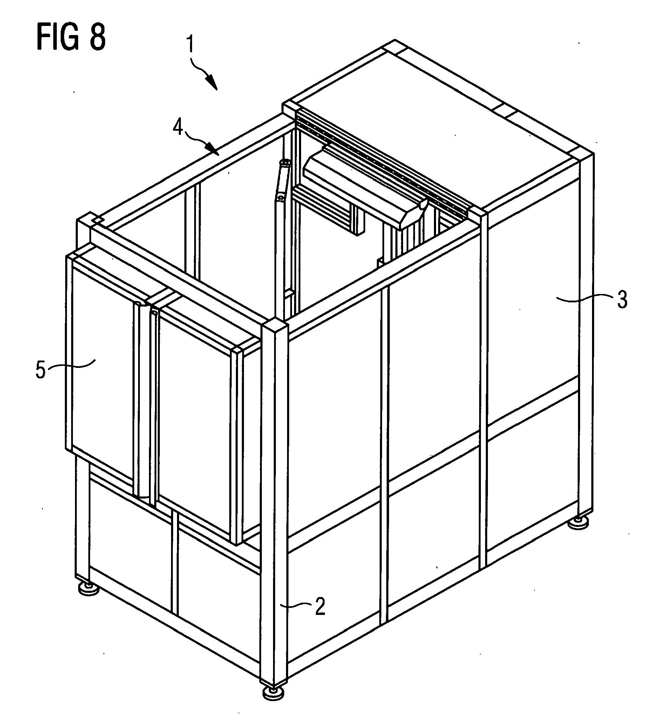

Figur 8 zeigt ein weiteres Beispiel des Prüfsystems 1 in einer perspektivischen Darstellung. Ähnlich wie das Prüfsystem 1 aus den Figur 3 bis 7 umfasst das in Figur 8 dargestellte Prüfsystem ein Grundgestell 2, welches nun an den Wandflächen vollständig mit Platten 3 verkleidet ist. Der obere Teil gewissermaßen die Decke der Prüfkabine 4 ist als verschließbare Beladeöffnung ausgebildet. In einem vorderen Bereich des Prüfsystems 1 ist die Prüfkabine 4 mit verschließbaren Türen 5 verschlossen.

Die Informationseinheit und die Bedieneinheit ist in diesem Prüfsystem 1 nicht vorhanden. Die Bedienung des Prüfsystems 1 und seine Überwachung kann beispielsweise über eine speicherprogrammierbare Steuerung (SPS) oder ein anderes Netzwerk erfolgen.

In der Prüfkabine 4 ist die eigentliche Prüfanordnung für die Turbinenschaufel angeordnet. Die einzelnen Bestandteile der Prüfanordnung werden im Zusammenhang mit den folgenden Figuren beschrieben.

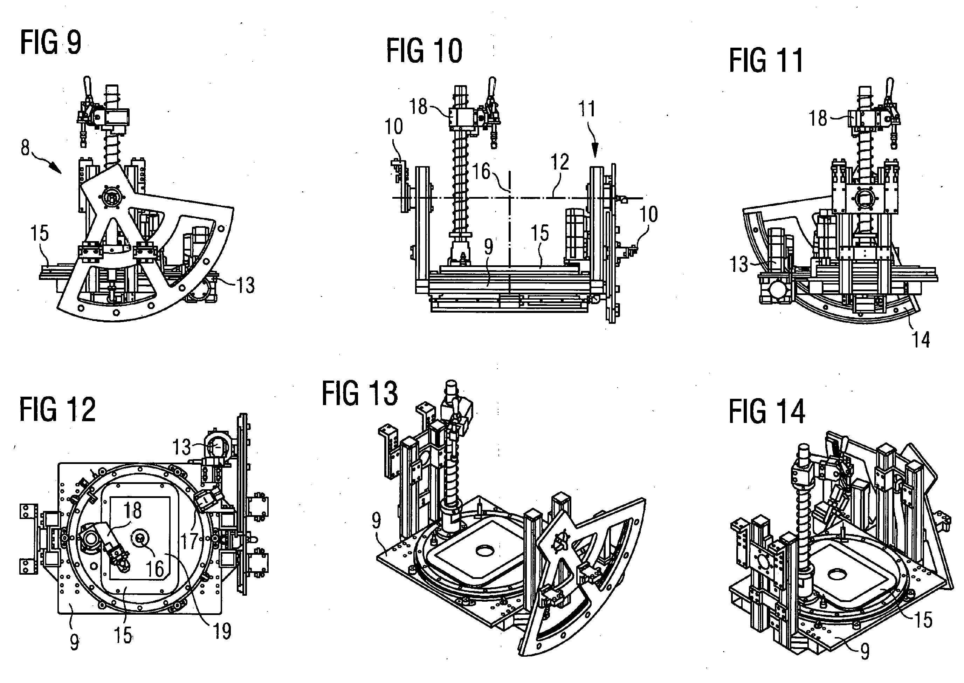

In den Figuren 9 bis 14 ist eine Dreh-Schwenkvorrichtung 8 des Prüfsystems 1 in unterschiedlichen Ansichten detailliert dargestellt. Die Figuren 9 bis 11 zeigen dabei unterschiedliche Seitenansichten, Figur 12 eine Draufsicht und die Figuren 13 und 14 unterschiedliche perspektivische Ansichten.

Die Dreh-Schwenkvorrichtung 8 umfasst eine Grundplatte 9, die in einer Ausgangsstellung oder Grundposition waagerecht ausgerichtet ist. Die Grundplatte 9 und damit die Dreh-Schwenkvorrichtung 8 im Ganzen wird mit Befestigungselementen 10 an dem Grundgestell 2 befestigt. Die Befestigung kann mit einer Schraubverbindung, einer Klemmverbindung oder einer ähnlich geeigneten Befestigung erfolgen.

Zwischen dem Befestigungselement 10 und der Grundplatte 9 ist eine Schwenkvorrichtung 11 angeordnet. Mittels der Schwenkvorrichtung 11 kann die Grundplatte 9 um eine Schwenkachse 12 geschwenkt werden. Die Schwenkachse 12 verläuft im Wesentlichen horizontal. Mit einem Motor 13 erfolgt die Schwenkbewegung der Grundplatte 9. An den Motor 13 ist ein Zahnrad angesetzt, welches in eine gebogene Zahnstange 14 eingreift. Die Zahnstange 14 hat beispielsweise die Form eines Kreissegments, aufweisend zum Beispiel einen Winkelbereich von etwa 90°. Über ein Gestänge oder eine andere geeignete Mechanik ist die Zahnstange 14 mit der Schwenkachse 12 verbunden, so dass bei Betätigung des Motors 13 die Bewegung der Zahnstange 14 in eine Schwenkbewegung der Grundplatte 9 übertragen wird.

Die Positionen der Grundplatte 9 entlang des Weges der Schwenkbewegung können arretierbar sein, beispielsweise durch die Haltekraft des Motors 13 oder durch andere Mittel wie zum Beispiel eingreifende Stifte.

An der Grundplatte 9 ist ein Drehteller 15 angeordnet, der um eine Drehachse 16 rotieren kann. Die Drehachse 16 verläuft rechtwinklig zu der Schwenkachse 12, ist in diesem Fall also senkrecht orientiert. Der Drehteller 15 hat an seiner äußeren Umfangsfläche oder zumindest an einem Teil der Umfangsfläche die Kontur eines Zahnrades, in welches ein auf einem Motor 17 aufgesetztes Zahnrad eingreift. Bei Betätigung des Motors 17 wird entsprechend der Drehteller 15 gedreht.

Auf dem Drehteller 15 ist eine Spannvorrichtung 18 zur Fixierung der Turbinenschaufel vorgesehen. Die Spannvorrichtung 18 umfasst eine senkrecht verlaufende Stativstange, an welcher ein in der Höhe verstellbarer und drehbarer Spanngriff befestigt ist.

Des Weiteren ist auf dem Drehteller 15 eine Aufnahme 19 für die Turbinenschaufel angeordnet. Die Aufnahme 19 kann zum Beispiel eine Ausnehmung, eine Erhebung, ein kompressibles Material oder eine Kombination davon aufweisen.

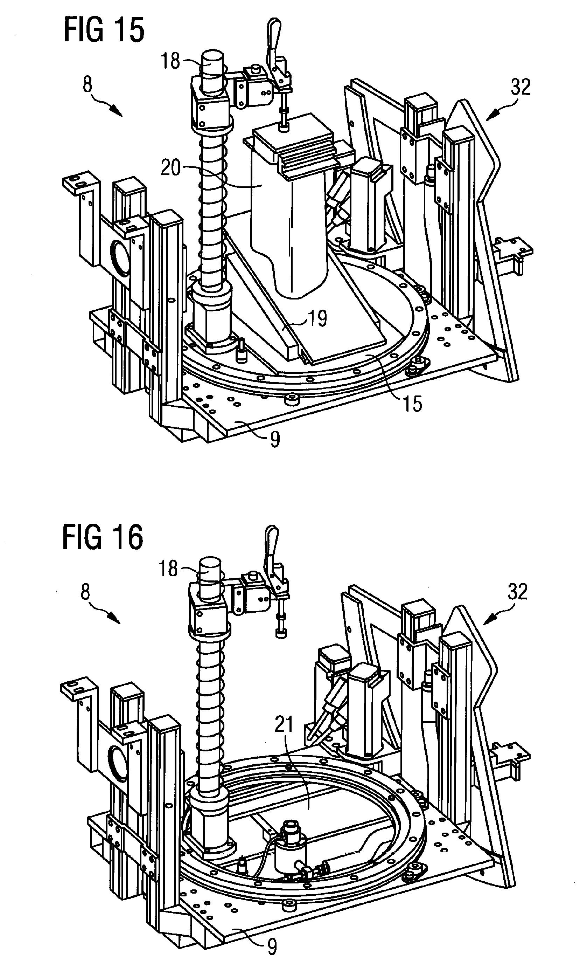

Die Figuren 15 und 16 zeigen zwei perspektivische Darstellungen der Dreh-Schwenkvorrichtung 8. In Figur 15 ist eine Turbinenschaufel 20 in der Dreh-Schwenkvorrichtung 8 befestigt. Mittels der Aufnahme 19 ist die Turbinenschaufel 20 auf dem Drehteller 15 angeordnet. Die Spannvorrichtung 18 greift in einem oberen Bereich der Turbinenschaufel 20 an, um diese durch Verspannung auf dem Drehteller 15 zu fixieren. Etwaig benötigte Adapter oder Zwischenstücke sowohl zwischen der Spannvorrichtung 18 und der Turbinenschaufel 20 als auch zwischen der Aufnahme 19 und der Turbinenschaufel 20 können entweder der Spannvorrichtung 18 bzw. der Aufnahme 19 zugerechnet werden oder der Turbinenschaufel 20.

Figur 16 zeigt die Dreh-Schwenkvorrichtung 8 ohne Turbinenschaufel 20. Zudem ist der Drehteller 15 durchbrochen dargestellt, um einen Blick auf die darunter liegende Luftdurchführung 21 freizugeben. Die Luftdurchführung 21 dient dazu, warme oder heiße Luft oder ein Gas während der Prüfung in das Innere der Turbinenschaufel 20 zu führen. Die Luftdurchführung 21 ist derart gestaltet, dass auch einer Rotation des Drehtellers 15 um die Drehachse 16 die Zufuhr der Luft oder des Gases gewährleistet ist. Ebenso ist eine Luftdurchführung im Bereich der Schwenkachse 32 vorhanden.

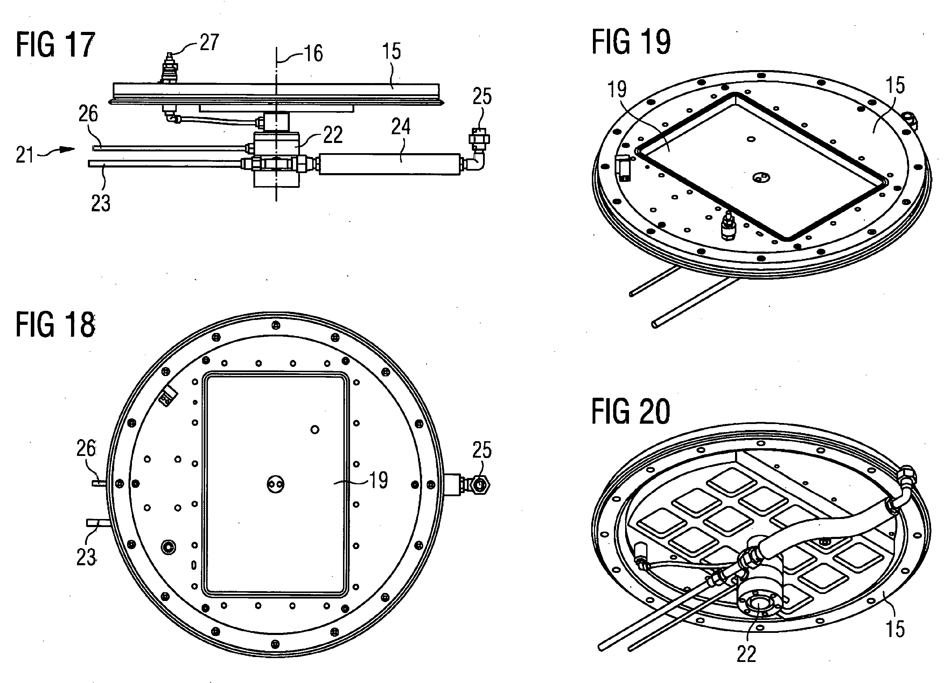

In den Figuren 17 bis 20 ist die Luftdurchführung 21 detailliert dargestellt. Dabei zeigen Figur 17 eine Seitenansicht und Figur 18 eine Draufsicht auf den Drehteller 15, die Figuren 19 und 12 perspektivische Ansichten auf die Oberseite bzw. die Unterseite des Drehtellers 15.

Die Luftdurchführung 21 umfasst einen zentralen hochtemperaturbeständigen Drehverbinder 22, der entlang der Drehachse 16 angeordnet ist. Der Drehverbinder 22 umfasst eine Hohlachse kommunizierend mit Öffnungen in der Aufnahme 19. Um diese Hohlachse dreht sich der Drehteller 15, so dass Luft oder Gas auch bei rotierendem Drehteller 15 in die Aufnahme und dann in die darin oder darauf angeordnete Turbinenschaufel 20 strömt.

Über eine erste Zuleitung 23 und zweite Zuleitung 24 können zwei verschiedene Gase oder unterschiedlich temperierte Gase derselben Art (bspw. Luft) zugeführt werden. So kann bspw. die erste Zuleitung 23 zur Zufuhr von gekühlter Luft und die zweite Zuleitung 24 zur Zufuhr von erwärmter Luft herangezogen werden. Durch wechselweise Zufuhr von gekühlter und erwärmter Luft kann ein zu starkes erwärmen oder zu starken abkühlen der Turbinenschaufel während der Prüfung vermieden werden. Zusätzlich oder alternativ besteht auch die Möglichkeit, die Turbinenschaufel vor der Zufuhr der erwärmten Luft durch Zufuhr von gekühlter Luft zu kühlen, um den Kontrast beim Prüfen mittels erwärmter Luft zu erhöhen. Ein prüfen mittels gekühlter Luft und eine Kontrasterhöhung durch vorwärmen der Turbinenschaufel mittels erwärmter Luft ist ebenfalls möglich. Die Luftzufuhr kann dabei über in den Figur 17 bis 20 nicht dargestellte Ventile gesteuert werden.

Eine weitere Zuleitung, die als Druckluftzuleitung 26 ausgebildet ist, führt zu dem Drehverbinder 22, wird durch den Drehverbinder 22 geführt, um zu einem auf dem Drehteller 15 angeordneten Ventil 27 zu gelangen. Dieses Ventil 27 dreht sich mit dem Drehteller 15, ebenso wie ein Teil der Zuleitung 26. Die Druckluftzuleitung 26 kann dazu verwendet werden, Druckluft für eine pneumatische Schaufeleinspannvorrichtung bereit zu stellen. Die beiden Zuleitungen 23 und 24 können wie bereits erwähnt verwendet werden, um unterschiedliche Gase oder unterschiedlich temperierte Gase zuzuführen. Unterschiedliche Arten von Gasen können dann entweder einzeln oder gemischt verwendet werden. Ebenso ist es möglich, dass eine der Zuleitungen 23 oder 24 Verwendung findet, Luft oder Gas aus der Prüfkabine 4 abzusaugen.

Der Drehverbinder 22 ist als Zweikanal-Drehverbinder ausgebildet und derartig konstruiert, dass die in einem unteren Teil des Drehverbinders 22 befindlichen Leitungen ortsfest sind, während sich die Hohlachse und die Leitung des oberen Teils des Drehverbinders 22 mit dem Drehteller 15 drehen. Ortsfest bedeutet hier auf dem Drehteller 15 bezogen, lässt jedoch eine Schwenkbewegung mit der Schwenkvorrichtung 11 zu.

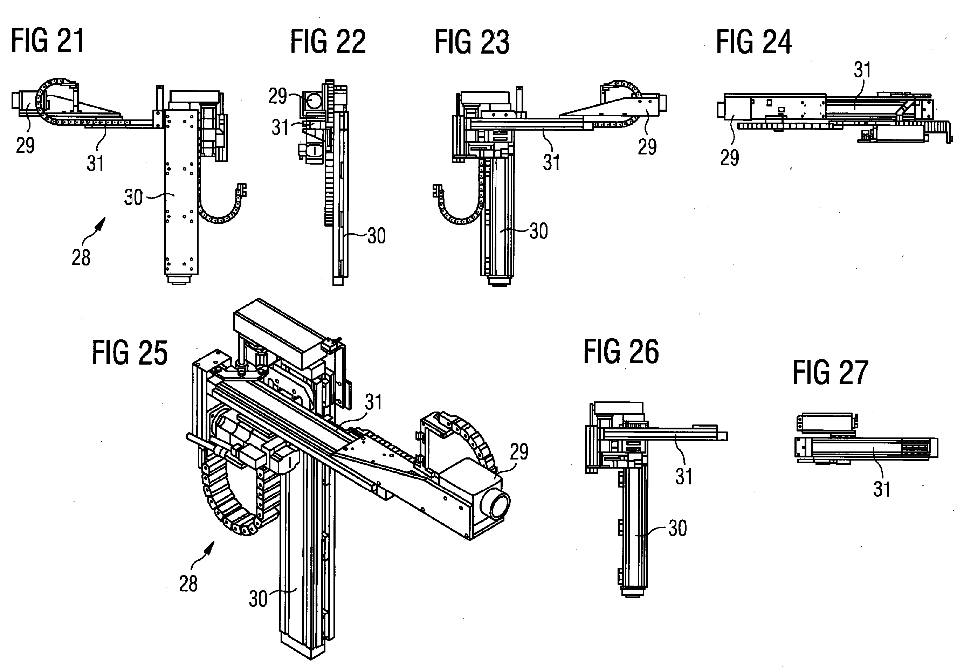

Die Figuren 21 bis 25 zeigen die Positioniervorrichtung 28 des Prüfsystems 1 in unterschiedlichen Ansichten. Dabei zeigen die Figuren 21 bis 23 die Positioniervorrichtung 28 in unterschiedlichen Seitenansichten, Figur 24 in einer Draufsicht und Figur 25 in einer perspektivischen Darstellung. Die Positioniervorrichtung 28 trägt eine Infrarotkamera 29, die mittels der Positioniervorrichtung 28 in zwei Freiheitsgraden positioniert werden kann.

Die Positioniervorrichtung 28 umfasst eine erste senkrecht angeordnete Lineareinheit 30, die an einem Aluminiumprofil des Grundgestells 2 befestigt werden kann. Entlang der ersten Lineareinheit 30 kann mittels eines Motors eine zweite waagerecht angeordnete Lineareinheit 31 bewegt werden. Dadurch wird der erste Freiheitsgrad der Positioniervorrichtung 28 in Z-Richtung realisiert. Die Lineareinheiten sind in den Figuren 26 und 27 ohne Kamera dargestellt, wobei Figur 26 eine Seitenansicht zeigt und Figur 27 eine Draufsicht.

Entlang der zweiten Lineareinheit 31 kann mittels eines weiteren Motors ein Schlitten oder eine Befestigungseinheit für die Infrarotkamera 29 bewegt werden. Dadurch wird der zweite Freiheitsgrad der Positioniervorrichtung 28 in X-Richtung realisiert.

Die Infrarotkamera 29 wird mittels der Positioniervorrichtung 28 in zwei Freiheitsgraden bewegt, wobei die Lage oder Ausrichtung der Kamera 29 unverändert bleibt. Damit behält die Infrarotkamera eine konstante waagerechte Lage bei, was zu einer Erhöhung der Bildqualität führt.

Die in Verbindung mit den Figuren 9 bis 27 beschriebenen Bestandteile des Prüfsystems 1, nämlich die Dreh-Schwenkvorrichtung 8, der Drehteller 15, die Luftdurchführung 21 und die Positioniervorrichtung 28 sind an dem Grundgestell 2 bzw. in der Prüfkabine 4 angeordnet. Genauer gesagt ist die Dreh-Schwenkvorrichtung 8 an Profilen oder Platten des Grundgestells 2 befestigt, wodurch der Drehteller 15 und die Luftdurchführung 21 ebenfalls befestigt sind. Die Positioniervorrichtung 28 ist ebenfalls an Profilen oder Platten des Grundgestells 2 befestigt und zwar derart, dass die Infrarotkamera 29 in Relation zu dem Drehteller 15 positioniert werden kann, um alle zu prüfenden Bereiche der Turbinenschaufel 20 aufnehmen zu können. Aufnahmen der Turbinenschaufel 20 sind sowohl in der Grundstellung als auch in jeglichen Kombinationen der Schwenkbewegung und der Drehbewegung möglich.

Bei Verwendung einer Prüfkabine 4 ist es möglich, dass die komplette Dreh-Schwenkvorrichtung 8, der Drehteller 15, die Luftdurchführung 21 und die Positioniervorrichtung 28 mit der Infrarotkamera 29 innerhalb der Prüfkabine 4 angeordnet sind. Um zum Beispiel das umbaute Volumen der Prüfkabine 4 zu verringern, können die Bestandteile des Prüfsystems 1 derart innerhalb des Grundgestells 2 angeordnet sein, dass lediglich die Oberseite der Grundplatte 9 sowie ein Teil der Positioniervorrichtung 28 mit der Infrarotkamera 29 innerhalb der Prüfkabine 4 angeordnet sind. Bestandteile der Prüfkabine 4 wie zum Beispiel Boden- oder Seitenbereiche können flexibel ausgeführt sein, um Schwenkbewegungen der Dreh-Schwenkvorrichtung 8 zu erleichtern.

Des Weiteren kann das Prüfsystem 1 eine nicht dargestellte Blitzlampe für blitzthermographische Messungen umfassen. Auch kann das Prüfsystem 1 eine Ultraschallvorrichtung für eine Ultraschallanregung aufweisen. Mit diesen zusätzlichen Vorrichtungen kann der Umfang der Prüfung erweitert werden.

Im Folgenden wird ein Prüfvorgang einer Turbinenschaufel 20 in dem Prüfsystem 1 beschrieben. Nach Öffnen der Türen 5 der Prüfkabine 4 wird die Turbinenschaufel 20 in die Aufnahme 19 des Drehtellers 15 eingesetzt und dort mit der Spannvorrichtung 18 fixiert. Um das Einsetzen zu erleichtern kann die Dreh-Schwenkvorrichtung 8 in eine Einsetzposition gefahren werden. Die nun folgende Prüfung kann bei offenen oder geschlossenen Türen 5 durchgeführt werden. Zudem ist eine Beladung mittels Kran durch die obere Beladeöffnung möglich.

Für die Prüfung wählt der Bediener des Prüfsystems 1 ein Prüfprogramm aus, dies kann beispielsweise mittels der Bedieneinheit 7 geschehen. Durch das Prüfprogramm oder die Eingabe einzelner Parameter werden die Bewegungen der Dreh-Schwenkvorrichtung 8, des Drehtellers 15 und der Positioniervorrichtung 28 vorgegeben. Weiterhin werden die Zufuhr von Luft, warmer Luft oder Gas durch die Luftdurchführung 21 und die Steuerung der Infrarotkamera 29, wie zum Beispiel Auslösezeitpunkte und -parameter, vorgegeben. Blitzlicht und Ultraschall werden ebenfalls durch das Prüfprogramm gesteuert.

Während der Prüfung der Turbinenschaufel 20 wird der Status des Prüfsystems 1 mittels der Informationseinheit 6 angezeigt. Der Status sowie weitere Details des Prüfsystems 1 können an der Bedieneinheit 7 angezeigt werden. Ein Protokoll und/oder Daten der Prüfung können ebenfalls an der Bedieneinheit 7 zur Verfügung gestellt werden und/oder über ein Netzwerk oder einen Datenträger weiteren Computern zur Verfügung gestellt werden.

Das Prüfsystem 1 kann zur Durchführung des Prüfprogramms einen dedizierten Steuerrechner aufweisen, der den Prüfvorgang steuert, überwacht und/oder die Kommunikation steuert. Ebenso ist es möglich, dass das Prüfsystem 1 durch einen externen Rechner, wie eine Leit- oder Steuereinheit der Fabrik oder einen Rechner der Bedieneinheit 7, gesteuert wird.

## Patentansprüche

1. Prüfsystem zur Überprüfung der Beschichtung und von offenen Kühlluftbohrungen von Turbinenschaufeln (20), mit einer Positioniervorrichtung (28) für eine Infrarotkamera (29) mit zwei Freiheitsgraden,
**gekennzeichnet durch**
eine Dreh-Schwenkvorrichtung (8) zur Positionierung der Turbinenschaufel (20) und eine an der Dreh-Schwenkvorrichtung (8) angeordnete drehbare Luftdurchführung (21) zum Einbringen von Luft mit einer im Vergleich zur Turbinenschaufel (20) höheren oder niedrigeren Temperatur in die Turbinenschaufel (20).

2. Prüfsystem nach Anspruch 1,
wobei die Dreh-Schwenkvorrichtung (8) eine Grundplatte (9) mit einem um eine Drehachse (16) drehbaren Drehteller (15) aufweist.

3. Prüfsystem nach Anspruch 2,
wobei die Grundplatte (9) um eine Schwenkachse (12), die senkrecht zu der Drehachse (16) ist, schwenkbar ist.

4. Prüfsystem nach einem der Ansprüche 1 bis 3,
wobei die Dreh-Schwenkvorrichtung (8) in Dreh- und/oder Schwenkrichtung arretierbar oder motorisch angetrieben ist.

5. Prüfsystem nach einem der Ansprüche 1 bis 4,
wobei die Dreh-Schwenkvorrichtung (8) eine Schaufeleinspannvorrichtung (18) zur Fixierung der Turbinenschaufel (20) aufweist.

6. Prüfsystem nach einem der Ansprüche 1 bis 5,
wobei die Luftdurchführung (21) einen hochtemperaturbeständigen Drehverbinder (22) aufweist.

7. Prüfsystem nach Anspruch 6,
wobei der Drehverbinder (22) im Bereich der Drehachse (16) angeordnet ist.

8. Prüfsystem nach einem der Ansprüche 1 bis 7,
wobei die Positioniervorrichtung (28) einen horizontalen und einen vertikalen Freiheitsgrad aufweist.

9. Prüfsystem nach einem der Ansprüche 1 bis 8,
aufweisend eine an der Positioniervorrichtung (28) angeordnete Infrarotkamera (29).

10. Prüfsystem nach einem der Ansprüche 1 bis 9,
aufweisend ein Grundgestell (2) mit einer Prüfkabine (4), in der die Dreh-Schwenkvorrichtung (8) und die Positioniervorrichtung (28) angeordnet sind.

11. Prüfsystem nach Anspruch 10,
wobei die Prüfkabine (4) verschließbar ist.

12. Prüfsystem nach einem der Ansprüche 1 bis 11,
aufweisend eine Luftabsaugvorrichtung (24) und/oder eine Klimatisiervorrichtung für die Prüfkabine.

13. Prüfsystem nach einem der Ansprüche 10 bis 12,
aufweisend eine außerhalb der Prüfkabine (4) angeordnete Informations- und/oder Bedieneinheit (6, 7).

14. Prüfsystem nach einem der Ansprüche 1 bis 13,
aufweisend mindestens eine Blitzlampe für blitzthermographische Messungen.

15. Prüfsystem nach einem der Ansprüche 1 bis 14,
aufweisend eine Ultraschallvorrichtung für eine Ultraschallanregung der Turbinenschaufel (20).

## Claims

1. Testing system for examining the coating and open cooling-air holes of turbine blades (20), having a positioning device (28) for an infrared camera (29) with two degrees of freedom, **characterized by** a rotating-pivoting device (8) for positioning the turbine blade (20) and a rotatable air duct (21), arranged on the rotating-pivoting device (8), for introducing into the turbine blade (20) air at a temperature higher or lower in comparison with the turbine blade (20).

2. Testing system according to Claim 1,
the rotating-pivoting device (8) having a base plate (9) with a turntable (15) that is rotatable about an axis of rotation (16).

3. Testing system according to Claim 2,
the base plate (9) being pivotable about a pivot axis (12), which is perpendicular to the axis of rotation (16).

4. Testing system according to one of Claims 1 to 3,
the rotating-pivoting device (8) being arrestable or motor-driven in the rotating and/or pivoting direction.

5. Testing system according to one of Claims 1 to 4,
the rotating-pivoting device (8) having a blade clamping device (18) for fixing the turbine blade (20).

6. Testing system according to one of Claims 1 to 5,
the air duct (21) having a high-temperature-resistant rotary connector (22).

7. Testing system according to Claim 6,
the rotary connector (22) being arranged in the region of the axis of rotation (16).

8. Testing system according to one of Claims 1 to 7,
the positioning device (28) having a horizontal degree of freedom and a vertical degree of freedom.

9. Testing system according to one of Claims 1 to 8,
having an infrared camera (29) arranged on the positioning device (28).

10. Testing system according to one of Claims 1 to 9, having a basic frame (2) with a testing booth (4), in which the rotating-pivoting device (8) and the positioning device (28) are arranged.

11. Testing system according to Claim 10,
the testing booth (4) being closable.

12. Testing system according to one of Claims 1 to 11,
having an air extraction device (24) and/or an air conditioning device for the testing booth.

13. Testing system according to one of Claims 10 to 12,
having an information and/or operator control unit (6, 7) arranged outside the testing booth (4).

14. Testing system according to one of Claims 1 to 13,
having at least one flash lamp for flash-thermographic measurements.

15. Testing system according to one of Claims 1 to 14,
having an ultrasonic device for ultrasonic excitation of the turbine blade (20).

## Revendications

1. Système de contrôle du revêtement et des trous ouverts pour de l'air de refroidissement d'aubes (20) de turbine, comprenant un dispositif (28) de positionnement d'une caméra (29) infrarouge ayant deux degrés de liberté,
**caractérisé par**
un dispositif (8) de rotation-pivotement pour la mise en position de l'aube (20) de turbine et d'un passage (21) tournant pour de l'air, disposé sur le dispositif (8) tournant-pivotant pour introduire de l'air dans l'aube (20) de turbine à une température plus haute ou plus basse que celle de l'aube (20) de turbine.

2. Système de contrôle suivant la revendication 1, dans lequel le dispositif (8) de rotation-pivotement a une plaque (9) de base ayant un plateau (15) tournant autour d'un axe (16) de rotation.

3. Système de contrôle suivant la revendication 2, dans lequel la plaque (9) de base peut pivoter autour d'un axe (12) de pivotement, qui est perpendiculaire à l'axe (16) de rotation.

4. Système de contrôle suivant l'une des revendications 1 à 3, dans lequel le dispositif (8) tournant-pivotant est entraîné dans le sens de rotation et/ou dans le sens de pivotement en pouvant être arrêté ou motorisé.

5. Système de contrôle suivant l'une des revendications 1 à 4, dans lequel le dispositif (8) de rotation-pivotement a un dispositif (18) de blocage d'aube pour l'immobilisation de l'aube (20) de turbine.

6. Système de contrôle suivant l'une des revendications 1 à 5, dans lequel le passage (21) pour de l'air a un connecteur (22) tournant qui résiste aux hautes températures.

7. Système de contrôle suivant la revendication 6, dans lequel le connecteur (22) tournant est monté dans la zone de l'axe (16) de rotation.

8. Système de contrôle suivant l'une des revendications 1 à 7, dans lequel le dispositif (28) de mise en position a un degré de liberté horizontal et un degré de liberté vertical.

9. Système de contrôle suivant l'une des revendications 1 à 8, ayant une caméra (29) infrarouge montée sur le dispositif (28) de mise en position.

10. Système de contrôle suivant l'une des revendications 1 à 9, comportant un bâti (2) de base ayant une cabine (4) de contrôle dans laquelle le dispositif (8) de rotation-pivotement et le dispositif (28) de mise en position sont disposés.

11. Système de contrôle suivant la revendication 10, dans lequel la cabine (4) de contrôle peut coulisser.

12. Système de contrôle suivant l'une de revendications 1 à 11, comportant un dispositif (24) d'aspiration de l'air et/ou un dispositif de conditionnement d'air de la cabine de contrôle.

13. Système de contrôle suivant l'une des revendications 10 à 12, comportant une unité (6 , 7) d'information et/ou de commande disposée à l'extérieur de la cabine (4) de contrôle.

14. Système de contrôle suivant l'une des revendications 1 à 13, comportant au moins une lampe éclair pour des mesures en thermographie éclair.

15. Système de contrôle suivant l'une des revendications 1 à 14, comportant un dispositif à ultrasons pour une excitation par ultrasons de l'aube (20) de turbine.
